# FASCICULE DE BREVET EUROPEEN

(11) **EP 1 588 059 B1**
(45) Date de publication et mention de la délivrance du brevet: **07.03.2007**
(21) Numéro de dépôt: 04705099.2
(22) Date de dépôt: 26.01.2004
(51) Int. Cl.: F15B 15/12, F16J 15/54

(54) **VERIN ROTATIF**
DREHSTELLER
ROTATING ACTUATOR

(30) Priorité: 27.01.2003 FR 0300837
(43) Date de publication de la demande: 26.10.2005
(73) Titulaire: Paunet, André, F-44150 Saint Herblon (FR)
(72) Inventeur: Paunet, André, F-44150 Saint Herblon (FR)
(74) Mandataire: Laget, Jean-Loup
(86) Numéro de dépôt international: PCT/FR2004/000170
(87) Numéro de publication internationale: WO 2004/076866

(56) Documents cités:
- EP-A- 1 150 018
- DE-A- 1 750 352
- FR-A- 1 214 956
- FR-A- 1 270 078
- FR-A- 1 566 834
- GB-A- 926 836

## Description

La présente invention concerne un vérin rotatif, de préférence hydraulique.

Elle concerne plus particulièrement un vérin rotatif du type constitué d'un corps et d'un arbre délimitant entre eux au moins un volume de travail, chaque volume de travail étant constitué d'une cavité annulaire compartimentée au moyen d'au moins deux cloisons s'étendant entre deux faces, dites faces d'extrémité de ladite cavité, ces cloisons radiales portées respectivement l'une par l'arbre, l'autre par le corps de vérin venant, par leur bord libre opposé équipé d'une garniture d'étanchéité, en contact d'appui glissant étanche, l'une contre la paroi interne du corps, l'autre contre la paroi externe de l'arbre de manière à former au moins deux chambres à volume variable aptes à être mises alternativement sous pression, par admission de fluide, pour générer un déplacement relatif en rotation du corps et de l'arbre.

Un tel vérin est plus particulièrement décrit dans les brevets FR-A-2.618.189 et DE-1.750.352. Du fait de leur conception, de tels vérins rotatifs dits à palettes présentent généralement une usure relativement rapide dans le temps due à la présence de fuite au niveau des joints ou garnitures d'étanchéité équipant la tranche de chaque cloison ou palette. Cette usure est due au frottement et aux déformations éventuelles des éléments constitutifs du vérin. II en résulte la nécessité de changer relativement fréquemment les garnitures d'étanchéité.

Lorsque le joint est un joint préformé et soudé en plusieurs endroits, comme l'illustrent en particulier les figures 3 et 4 du brevet allemand DE-1750.352, toute usure du joint nécessite de disposer d'un joint identique en stock pour procéder au changement. En outre, du fait de la pré-conformation, le changement d'un joint est une opération longue et complexe. En outre, la conception du joint équipant l'arbre du vérin nécessite de procéder à des opérations de raccordement dans des zones sensibles où il existe un risque important que le raccordement ne résiste pas dans le temps.

On connaît par ailleurs, comme l'illustrent les brevets FR-A-1.270.078 ou GB-A-926.836, des vérins rotatifs dans lesquels la garniture d'étanchéité est comprimée par l'intermédiaire d'un fluide en direction de la paroi sur laquelle elle est destinée à prendre appui de manière à renforcer l'efficacité de l'étanchéité. Toutefois, en raison de la configuration du joint, seul le joint équipant le bord libre de chaque cloison peut être mis sous pression. Il est nécessaire de disposer de joint supplémentaire exempt de toute mise sous pression pour la réalisation de l'étanchéité dans la zone de liaison entre corps et arbre, au niveau des faces d'extrémité du corps. Il en résulte à nouveau une complexité de l'ensemble.

Un but de la présente invention est donc de proposer un vérin rotatif du type précité dont la conception de la garniture d'étanchéité est simplifiée en vue notamment de faciliter le montage et le changement des garnitures d'étanchéité sans nuire à l'efficacité de l'étanchéité.

Un autre but de la présente invention est de proposer un vérin rotatif dont la conception de la garniture d'étanchéité permet la mise sous pression de la totalité de ladite garniture d'étanchéité, cette garniture d'étanchéité étant apte à assurer d'une part une étanchéité entre chambres à volume variable, d'autre part l'étanchéité desdites chambres avec l'extérieur.

Un autre but de la présente invention est de proposer un vérin rotatif dont la conception de la garniture d'étanchéité permet de limiter le nombre de garniture d'étanchéité nécessaire.

Un autre but de la présente invention est de proposer un vérin rotatif dont la conception permet la réalisation d'un vérin de grande longueur dans lequel les risques de fléchissement de l'arbre ou de flambage des cloisons ou palettes sont réduits voire supprimés.

A cet effet, l'invention a pour objet un vérin rotatif du type constitué d'un corps et d'un arbre délimitant entre eux au moins un volume de travail, chaque volume de travail étant constitué d'une cavité annulaire compartimentée au moyen d'au moins deux cloisons s'étendant entre deux faces, dites faces d'extrémité de ladite cavité, ces cloisons radiales portées respectivement l'une par l'arbre, l'autre par le corps de vérin venant, par leur bord libre opposé équipé d'une garniture d'étanchéité, en contact d'appui glissant étanche, l'une contre la paroi interne du corps, l'autre contre la paroi externe de l'arbre de manière à former au moins deux chambres à volume variable aptes à être mises alternativement sous pression, par admission de fluide, pour générer un déplacement relatif en rotation du corps et de l'arbre, caractérisé en ce que chaque garniture d'étanchéité équipant le bord libre d'une cloison se prolonge en direction de chaque face d'extrémité de la cavité annulaire jusqu'au droit de ladite face pour s'étendre dans la zone de liaison entre face d'extrémité et corps ou respectivement arbre, cette garniture d'étanchéité équipant l'arbre ou le corps se présentant sous forme d'un joint linéaire continu, débitable au kilomètre et découpable à longueur, pour venir se loger dans une gorge du vérin conformée en fonction de la disposition souhaitée du joint, ce joint se développant d'une face d'extrémité à une autre suivant un trajet en boucle, la fermeture de la boucle étant obtenue au moins par mise en contact des extrémités du cordon constitutif du joint, et en ce que la garniture d'étanchéité se présente au niveau du bord libre de chaque cloison sous forme de deux brins axiaux s'étendant d'une face d'extrémité à une autre de manière à former une double barrière d'étanchéité.

Grâce à la configuration de la garniture d'étanchéité sous forme d'un joint linéaire continu s'étendant d'une face d'extrémité à une autre en passant par le bord libre de la cloison et en se développant sous forme d'une boucle fermée, il en résulte la possibilité de limiter le nombre de garnitures d'étanchéité à deux pour obtenir à la fois une étanchéité entre chambres à volume variable et une étanchéité avec l'extérieur.

Par ailleurs, grâce à cette configuration, on obtient une double barrière d'étanchéité, notamment dans la zone s'étendant le long d'un bord libre d'une cloison.

Il est également possible, grâce à cette configuration sous forme d'un simple cordon du joint, d'éviter, au niveau du parcours suivi par la garniture d'étanchéité dans la gorge ménagée soit dans le corps, soit dans l'arbre, un pliage à angle droit du joint, pliage dont on sait qu'il peut être dommageable pour un tel joint.

Selon une forme de réalisation préférée de l'invention, la partie de la garniture d'étanchéité, tournée vers la partie de vérin telle que cloison, corps ou arbre dont elle est solidaire, est apte à être soumise, lors du fonctionnement du vérin, à une force de poussée tendant à maintenir appliquée la partie dite active de la garniture d'étanchéité contre la paroi du corps ou de l'arbre avec laquelle elle est en contact d'appui glissant.

Grâce à cette conception du vérin, il en résulte un maintien permanent de la garniture d'étanchéité, en particulier de la surface active de cette dernière, contre la surface avec laquelle cette garniture d'étanchéité est en contact d'appui glissant de manière à empêcher tout risque de fuite et à pallier une usure prématurée de la garniture d'étanchéité.

A nouveau, grâce à cette mise sous pression de la garniture d'étanchéité en combinaison avec la conception de la garniture d'étanchéité qui assure à la fois l'étanchéité entre chambres et l'étanchéité des chambres avec l'extérieur, on obtient un résultat parfait limitant de manière importante les risques de fuite.

L'invention sera bien comprise à la lecture de la description suivante d'exemples de réalisation, en référence aux dessins annexés dans lesquels :
la figure 1 représente une vue schématique partielle d'un vérin rotatif conforme à l'invention dans laquelle l'arbre du vérin a également été représenté seul dans la partie de gauche de la figure ;
la figure 2 représente une vue en perspective et côte à côte des garnitures d'étanchéité aptes à équiper respectivement l'arbre et le corps du vérin rotatif objet de l'invention ;
la figure 3 représente une vue en perspective des garnitures d'étanchéité équipant respectivement l'arbre et le corps du vérin dans une position correspondant à l'état monté sur lesdits éléments ;
la figure 4 représente une vue partielle en perspective d'une garniture d'étanchéité apte à équiper un arbre muni de deux palettes disposées de manière diamétralement opposée sur l'axe de l'arbre ;
la figure 5 représente une vue schématique partielle d'un autre mode de réalisation d'un vérin conforme à l'invention ;
la figure 6 représente une vue partielle en perspective des garnitures d'étanchéité équipant au moins une partie du vérin de la figure 5 à l'état non monté de ces garnitures d'étanchéité ;
la figure 7 représente une vue partielle en perspective d'une partie des garnitures d'étanchéité équipant le vérin de la figure 5 à l'état monté des garnitures d'étanchéité ;
la figure 8 représente une vue en coupe transversale du vérin de la figure 5 et
la figure 9 représente une vue de détail de la cloison portée par le corps de vérin.

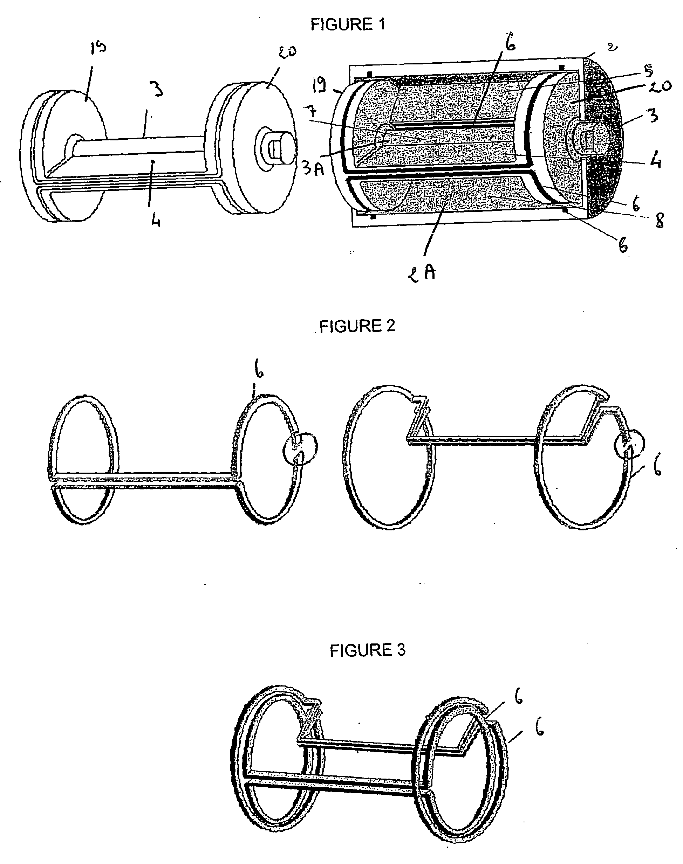

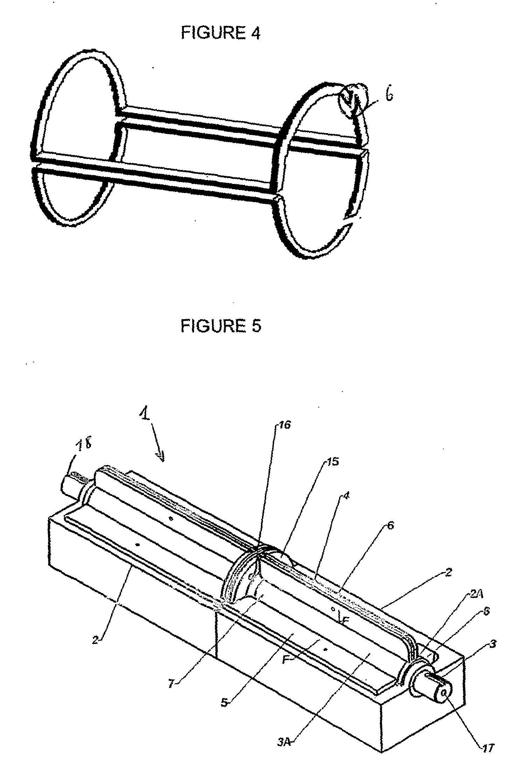

Comme mentionné ci-dessus, le vérin 1 rotatif, objet de l'invention, est constitué d'un corps 2 et d'un arbre 3 délimitant entre eux au moins un volume de travail. Ainsi, dans l'exemple représenté à la figure 1, le vérin ne comporte qu'un seul volume de travail tandis que le vérin de la figure 5 comporte deux volumes de travail. Chaque volume de travail est constitué d'une cavité annulaire compartimentée au moyen d'au moins deux cloisons 4, 5 s'étendant entre deux faces 19, 20 dites faces d'extrémité de ladite cavité. Ces cloisons 4, 5 radiales sont portées respectivement l'une 4 par l'arbre 3, l'autre représentée en 5 par le corps 2 de vérin. Ainsi, dans les exemples représentés aux figures, le corps 2 est un corps parallélépipédique formé par assemblage de deux demi-coquilles de manière à délimiter, à l'état assemblé des deux demi-coquilles, une cavité cylindrique fermée à l'exception de deux passages à ses extrémités permettant une sortie de l'arbre 3 disposé longitudinalement à l'intérieur de la cavité ainsi délimitée par le corps 2. Arbre 3 et corps 2 forment ainsi une cavité annulaire compartimentée au moyen d'au moins deux cloisons 4, 5 ou palettes radiales. Ces cloisons ou palettes peuvent affecter un grand nombre de formes. Dans les exemples représentés, elles sont simplement constituées par une plaque qui peut être formée d'une seule pièce avec l'élément du vérin qui la porte ou être rapportée sur cet élément et fixée à ce dernier notamment par emboîtement. Ainsi, dans les exemples représentés, le corps 2 et l'arbre 3 comportent chacun une rainure destinée à la réception d'une cloison dont l'un des bords vient se loger à l'intérieur de ladite rainure. Le bord libre opposé de la cloison est quant à lui équipé d'une garniture 6 d'étanchéité, telle qu'un joint élastiquement déformable. Ces cloisons viennent ainsi, par leur bord libre et plus particulièrement par l'intermédiaire de la garniture 6 d'étanchéité équipant un tel bord libre, en contact d'appui glissant étanche, l'une contre la paroi 2A interne du corps 2, l'autre, à savoir la cloison 5 portée par le corps 2 de vérin, contre la paroi 3A externe de l'arbre 3. Il est à noter que par contact d'appui glissant, on entend que les deux surfaces en contact d'appui sont animées d'un déplacement relatif. Ainsi, la face active de la garniture d'étanchéité et la surface du corps ou de l'arbre contre laquelle la garniture d'étanchéité prend appui sont animées d'un déplacement relatif générant ce contact d'appui glissant entre lesdits éléments.

Bien que dans les exemples représentés, à l'exception de la garniture d'étanchéité de la figure 4, qui correspond à celle d'un arbre équipé de deux palettes, l'arbre 3 et le corps 2 soient équipés d'une seule palette, il est bien évident que l'arbre 3 aurait pu être équipé de plusieurs palettes sans sortir du cadre de l'invention.

Du fait de la disposition des cloisons 4, 5 radiales, ces dernières forment ainsi, à l'intérieur de la cavité annulaire, par coopération avec le corps 2 et l'arbre 3 du vérin, au moins deux chambres 7, 8 à volume variable. Ces deux chambres 7, 8 sont aptes à être mises alternativement sous pression, par admission de fluide, pour générer un déplacement relatif en rotation du corps 2 et de l'arbre 3. Dans les exemples représentés, la partie tournante du vérin 1 est constituée par l'arbre 3, le corps 2 étant stationnaire. Une solution inverse, dans laquelle la partie tournante du vérin 1 aurait été constituée par le corps 2, l'arbre 3 étant stationnaire, aurait également pu être réalisée de manière équivalente. Dans les exemples représentés, l'admission de fluide servant à l'alimentation des chambres 7 et 8 à volume variable du vérin 1 s'effectue par l'arbre 3. Elle aurait pu, de manière équivalente, s'effectuer à partir de la cloison 5 solidaire du corps 2. Ainsi, l'arbre 3 et/ou la cloison 5 solidaire du corps 2 de vérin intègre(nt) au moins deux conduits 17, 18 servant alternativement de conduit d'admission et d'échappement de fluide des chambres 7, 8 du vérin pour permettre une mise sous pression alternative des chambres 7, 8.

Les chambres 7, 8 constituent ainsi alternativement une chambre d'admission de fluide et une chambre d'échappement de fluide. Lorsque le vérin 1 rotatif ne comporte qu'une seule cloison solidaire du corps 2 et une seule cloison solidaire de l'arbre 3, il en résulte la possibilité d'entraîner l'arbre 3 ou respectivement le corps 2 sur une plage angulaire voisine de 360°. Il aurait pu, de manière équivalente, être prévu plusieurs cloisons équipant respectivement le corps 2 et l'arbre 3. Dans ce cas, le mouvement des éléments constitutifs du vérin 1 est limité à l'intérieur de la plage angulaire précitée. Il aurait pu également être envisagé que l'arbre du vérin constitue le corps d'un second vérin similaire dont l'arbre serait disposé coaxial à l'arbre du premier vérin et à l'intérieur de ce dernier. Cet ensemble permettrait une rotation sur plus de 360° avec un pilotage unique ou double pilotage. Le fonctionnement d'un vérin 1 rotatif ne sera pas décrit plus en détail ci-après car il est bien connu à ceux versés dans cet art.

De manière caractéristique à l'invention, chaque garniture 6 d'étanchéité équipant le bord libre d'une cloison 4, 5 se prolonge, en direction de chaque face 19, 20 d'extrémité de la cavité annulaire, jusqu'au droit de ladite face pour s'étendre dans la zone de liaison entre face 19, 20 d'extrémité et corps 2, ou respectivement, arbre 3. Cette garniture 6 d'étanchéité équipant ainsi l'arbre 3 ou le corps 2 se présente sous forme d'un joint linéaire continu non préformé, débitable au kilomètre et découpable à longueur, pour venir se loger dans une gorge du vérin conformée en fonction de la disposition souhaitée du joint. Ce joint se développe ainsi d'une face 19 d'extrémité à une autre face 20 suivant un trajet en boucle, la fermeture de la boucle étant obtenue au moins par mise en contact des extrémités du cordon constitutif du joint. Ce joint est de préférence initialement non préformé et peut être éventuellement conformé à chaud au cours de la pose du joint.

On obtient ainsi des joints conformes aux configurations représentées notamment aux figures 2 à 4. II est à noter que les faces d'extrémité du volume de travail peuvent être constituées soit par des flasques épaulés positionnés sur l'arbre, comme l'illustre la figure 1, soit par les faces d'extrémité du corps 2, comme l'illustrent les extrémités de corps de la figure 5 sans sortir du cadre de l'invention. Indépendamment de la configuration retenue pour ces faces d'extrémité, la garniture d'étanchéité vient s'étendre jusqu'au droit de ces faces d'extrémité pour assurer l'étanchéité entre les chambres à volume variable et l'extérieur. Ainsi, une même garniture d'étanchéité sert à la fois à l'étanchéité des chambres entre elles et à l'étanchéité de la chambre avec l'extérieur sans pour autant compliquer la configuration de cette garniture d'étanchéité qui se présente sous forme d'un simple cordon de joint débitable au kilomètre et découpable à longueur. Ainsi, tout stock de joint préformé devient inutile. Par ailleurs, le changement d'un tel joint peut s'opérer de manière extrêmement aisée puisqu'il suffit de repositionner le joint à l'intérieur de la gorge du corps ou de l'arbre du vérin.

Dans les exemples représentés, cette garniture 6 d'étanchéité se présente, au niveau du bord libre de chaque cloison 4, 5 sous forme de deux brins axiaux, en l'occurrence parallèles, s'étendant d'une face 19 d'extrémité à une autre 20 de manière à former une double barrière d'étanchéité.

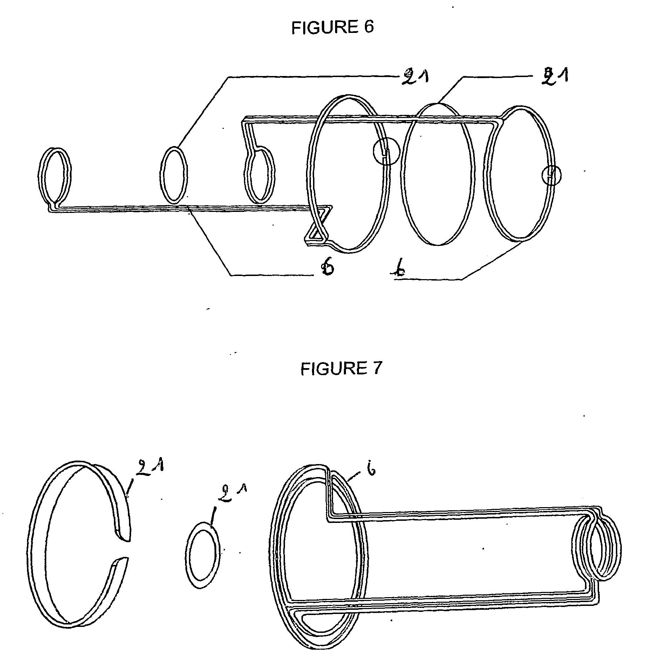

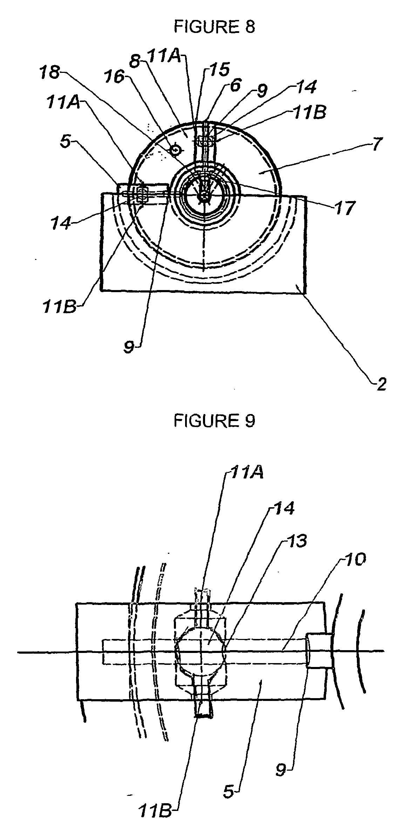

Dans les exemples représentés, la fermeture de la boucle, formée par chaque garniture 6 d'étanchéité qui se développe d'une face 19 d'extrémité à une autre 20 suivant un trajet en boucle, est obtenue par simple chevauchement des extrémités du cordon constitutif du joint. Les extrémités du joint sont dans ce cas, pour faciliter leur chevauchement, taillées en biseau comme l'illustre en particulier les figures 2, 4 et 6 dans lesquelles la zone de fermeture a été encerclée. Cette zone de fermeture est située au niveau de la partie de garniture d'étanchéité qui s'étend au droit des faces d'extrémité dans la zone de liaison entre corps et arbre. Dans les exemples représentés, ces garnitures 6 d'étanchéité de l'arbre 3 et du corps 2 s'étendent au niveau des faces 19, 20 d'extrémité en regard l'une de l'autre et sont séparées l'une de l'autre par un plat 21 de liaison, tel qu'un collier ou une rondelle, constituant une piste de glissement de chacune des garnitures 6 et empêchant ainsi un frottement des garnitures 6 entre elles. Ainsi, dans ce mode de réalisation, les faces 19, 20 d'extrémité sont par exemple constituées par un flasque épaulé de l'arbre 3. Les garnitures 6 d'étanchéité du corps 2 et de l'arbre 3 s'étendent au niveau desdites faces dans un même plan orthogonal à l'arbre 3. La garniture 6 d'étanchéité de l'arbre 3 est positionnée sur le pourtour dudit flasque, de préférence en regard de la garniture 6 d'étanchéité équipant le corps 2 de vérin. C'est dans cette configuration que l'étanchéité la plus efficace est obtenue. En l'absence de plat de liaison constitué dans ce cas de configuration par un collier, les garnitures d'étanchéité seraient amenées à frotter l'une contre l'autre, générant alors une usure prématurée de la garniture d'étanchéité. Pour éviter un tel phénomène, un collier fendu est inséré entre lesdites garnitures d'étanchéité. Lorsque l'arbre 3 est dépourvu de flasques épaulés, les faces d'extrémité sont ménagées au niveau du corps 2, comme l'illustre une des extrémités du vérin de la figure 5. Dans ce cas, tel que représenté à la figure 7, les garnitures d'étanchéité équipant le corps 2 et l'arbre 3 sont amenées dans la zone de liaison des faces d'extrémité entre corps et arbre à être disposées dans deux plans parallèles, le plat 21 de liaison étant dans ce cas constitué par une rondelle 21 s'insérant entre lesdites garnitures d'étanchéité pour les mêmes raisons que celles mentionnées ci-dessus.

Suivant le nombre de palettes de l'arbre 3, la garniture d'étanchéité de l'arbre 3 peut être conforme soit à celle représentée à la figure 2 dans la vue de gauche, soit à celle représentée dans la figure 4. A chaque fois, cette garniture d'étanchéité s'étend au moins sur une partie du pourtour circulaire du flasque destiné à constituer une face d'extrémité avant de rejoindre l'autre face d'extrémité par une portion linéaire suivant le bord libre de la cloison puis de revenir en direction de la première face d'extrémité, une fois cette seconde face d'extrémité équipée toujours en suivant le bord libre de la cloison.

Dans l'exemple représenté à la figure 5, l'arbre 3 du vérin 1 est muni sur sa longueur en un emplacement quelconque d'au moins un flasque 15 épaulé solidaire de la cloison 4 portée par l'arbre en vue de limiter les risques de flambage de cette dernière. Ce flasque 15 divise le corps 2 en deux volumes de travail et constituant une face d'extrémité de chaque volume de travail. Les volumes de travail communiquent entre eux par l'intermédiaire d'orifices 16 ménagés dans le flasque 15. La présence du flasque 15 épaulé permet d'une part de constituer un raidissement de l'arbre dans le sens de la longueur et d'empêcher un fléchissement de ce dernier, d'autre part de solidariser au moins un bord transversal de la cloison 4 audit flasque 15 de manière à limiter les risques de flambage de cette cloison. Grâce à cette solution, un vérin de plus grande longueur peut être réalisé.

Pour parfaire l'étanchéité de l'ensemble, la partie de la garniture 6 d'étanchéité, tournée vers la partie de vérin telle que cloison 4, 5, corps 2 ou arbre 3 dont elle est solidaire, est apte à être soumise, lors du fonctionnement du vérin, à une force F de poussée tendant à maintenir appliquée la partie dite active de la garniture 6 d'étanchéité contre la paroi du corps 1 ou de l'arbre 3 avec laquelle elle est en contact d'appui glissant. On appelle partie active de la garniture 6 d'étanchéité celle destinée à venir en contact avec une surface de la paroi du corps 2 ou de l'arbre 3 pour assurer l'étanchéité.

Dans les exemples représentés, la force F de poussée est exercée par l'intermédiaire du fluide sous pression amené au contact de la garniture 6 d'étanchéité. Ce fluide sous pression, amené au contact de la garniture 6 d'étanchéité est constitué par le fluide d'alimentation des chambres 7, 8 du vérin 1. Ainsi, le fluide sous pression destiné à exercer une force F de poussée sur la garniture 6 d'étanchéité alimente une chambre 9, dite chambre de compression de la garniture 6, ménagée entre la garniture 6 d'étanchéité et la partie de la cloison 4, 5 ou du flasque épaulé ou du corps 2 servant de siège à ladite garniture 6. Cette chambre 9 s'étend de préférence sur toute la longueur de la garniture 6.

Pour faciliter l'exercice d'une telle force d'appui, la garniture d'étanchéité peut affecter une forme conforme à celle représentée à la figure 9. Dans ce cas, la partie de la garniture 6 d'étanchéité, tournée vers la cloison 4 ou 5, présente une face concave à concavité tournée vers ladite cloison ou vers l'élément du vérin qui la porte. La chambre 9 de compression du joint peut quant à elle affecter la forme d'une cavité cylindrique.

Dans les exemples représentés, la chambre 9 de compression de la garniture 6 d'étanchéité est alimentée en fluide par l'intermédiaire d'un conduit 10, 11A, 11B communiquant sélectivement avec l'une ou l'autre des chambres 7, 8 du vérin en fonction de la pression régnant à l'intérieur desdites chambres 7, 8.

Ainsi, la force F de poussée, exercée par l'intermédiaire du fluide sous pression, est directement fonction de, ou asservie à, la pression régnant à l'intérieur desdites chambres. C'est la chambre disposant de la pression la plus élevée qui alimente en fluide la chambre 9 de compression de la garniture 6 d'étanchéité. Il en résulte ainsi que la force F de poussée, exercée par l'intermédiaire du fluide sous pression, est la plus élevée possible du fait qu'elle résulte du fluide ayant la pression la plus élevée à l'intérieur du vérin en position de fonctionnement de ce dernier. Ce conduit d'alimentation en fluide de la chambre 9 de compression de la garniture 6 d'étanchéité est ménagé dans une cloison 4, 5 du vérin 1 rotatif et dans les faces 19, 20 d'extrémité de l'arbre 3 ou du corps 2. Ainsi, dans l'exemple représenté, en particulier à la figure 8, chaque cloison est équipée d'un tel conduit. Ce conduit est constitué d'un premier tronçon 11A, 11B établissant une communication entre les chambres 7, 8 du vérin. Ce premier tronçon de conduit s'étend donc d'une face de la cloison à l'autre face de ladite cloison et constitue un conduit traversant ladite cloison. Ce conduit s'étend ainsi sensiblement perpendiculairement à l'axe longitudinal de l'arbre 3. Ce premier tronçon 11A, 11B de conduit débouche dans un second tronçon 10 d'alimentation en fluide de la chambre 9 de compression de la garniture 6. Ce second tronçon 10 d'alimentation en fluide de la chambre 9 de compression est également perpendiculaire à l'axe longitudinal de l'arbre 3. Il s'étend toutefois, dans la cloison, du bord libre vers le bord opposé solidaire de l'arbre ou du corps de la cloison. Le premier tronçon 11A, 11B, établissant une communication entre les chambres 7, 8 du vérin, est équipé d'un organe 12 d'obturation mobile en fonction de la pression régnant à l'intérieur des chambres 7, 8 du vérin. Cet organe 12 obture ainsi tour à tour la partie 11A ou 11B du premier tronçon s'étendant entre la chambre 7, 8 du vérin sous pression et le débouché 13 de ce premier tronçon dans le second tronçon 10. Ainsi, dans l'exemple représenté à la figure 8, la cloison 4 équipant l'arbre 3 est pourvue d'une section 11A de conduit débouchant dans la chambre 8 et d'une section 11B de conduit débouchant dans la chambre 7. Lorsque la chambre 8 est une chambre d'admission alimentée en fluide sous pression tandis que la chambre 7 est placée à l'échappement, la portion de conduit 11A est alimentée en fluide sous pression. L'organe 12 d'obturation équipant cette section de conduit est un clapet à bille 14 dont la bille 14 est mobile entre deux positions extrêmes s'étendant de part et d'autre du débouché 13 du premier tronçon 11A, 11B dans le second tronçon 10. En conséquence, cette bille tend à se déplacer en direction de la chambre 7 et à obturer la section de conduit 11B pour empêcher le fluide contenu dans la chambre 7 de parvenir jusqu'à la section de tronçon représentée en 10 à la figure. Lorsque c'est la chambre 7 qui constitue une chambre d'admission, la chambre 8 constituant alors une chambre d'échappement, le fonctionnement inverse est observé, la bille 14 se déplaçant à chaque fois sous l'effet de la pression la plus forte régnant à l'intérieur d'une chambre en direction de l'autre chambre pour obturer le conduit de l'autre chambre empêchant ainsi toute alimentation de la chambre 9 de compression de la garniture 6 d'étanchéité par la chambre disposant de la plus faible pression. Ainsi, la garniture d'étanchéité est constamment soumise à la pression la plus forte régnant à l'intérieur desdites chambres. Il en résulte une optimisation de la force d'appui exercée sur une telle garniture d'étanchéité et par suite une optimisation de l'efficacité de la garniture d'étanchéité.

Comme l'illustre en particulier la figure 9, l'organe 12 d'obturation, mobile en fonction de la pression régnant à l'intérieur des chambres du vérin pour obturer tour à tour la partie du premier tronçon s'étendant entre la chambre 7, 8 du vérin sous pression et le débouché 13 de ce premier tronçon dans le second tronçon 10, peut être équipé de deux organes radiaux faisant saillie à travers les entrées du premier tronçon pour s'étendre dans la première ou dans la seconde chambre du vérin. Ces organes en saillie constituent des butées de fin de course du vérin au voisinage des positions extrêmes desdites cloisons radiales. Elles empêchent ainsi l'usure prématurée desdites cloisons.

Dans les modes de réalisation où l'arbre 3 est muni, à chacune de ses extrémités, d'un flasque épaulé, la pression régnant dans les chambres est exercée sur ces flasques qui eux-mêmes sont contenus à l'intérieur du corps du vérin. Il en résulte une plus grande résistance mécanique de l'ensemble.

Grâce à la conception retenue pour chaque garniture d'étanchéité, le démontage et le changement d'une telle garniture d'étanchéité peuvent s'effectuer de manière extrêmement aisée. Dans le cas où la fermeture de la boucle est obtenue par simple chevauchement des extrémités du cordon constitutif du joint, il suffit de tirer sur l'une des extrémités et de sortir l'ensemble de la garniture d'étanchéité de la gorge, du corps ou de l'arbre dans laquelle elle est logée jusqu'à sortie complète du joint. Il peut alors être procédé au montage d'un nouveau joint qui sera par exemple issu d'une bobine de joint. Ce joint pourra être découpé à longueur et ainsi rapidement installé dans la gorge du corps ou de l'arbre pour permettre la mise en place d'une nouvelle étanchéité.

## Revendications

1. Vérin (1) rotatif du type constitué d'un corps (2) et d'un arbre (3) délimitant entre eux au moins un volume de travail, chaque volume de travail étant constitué d'une cavité annulaire compartimentée au moyen d'au moins deux cloisons (4, 5) s'étendant entre deux faces (19, 20), dites faces d'extrémité de ladite cavité, ces cloisons (4, 5) radiales portées respectivement l'une (4) par l'arbre (3), l'autre (5) par le corps (2) de vérin venant, par leur bord libre opposé équipé d'une garniture (6) d'étanchéité, en contact d'appui glissant étanche, l'une (4) contre la paroi (2A) interne du corps (2), l'autre (5) contre la paroi (3A) externe de l'arbre (3) de manière à former au moins deux chambres (7, 8) à volume variable aptes à être mises alternativement sous pression, par admission de fluide, pour générer un déplacement relatif en rotation du corps (2) et de l'arbre (3),
**caractérisé en ce que** chaque garniture (6) d'étanchéité équipant le bord libre d'une cloison (4, 5) se prolonge en direction de chaque face (19, 20) d'extrémité de la cavité annulaire jusqu'au droit de ladite face pour s'étendre dans la zone de liaison entre face (19, 20) d'extrémité et corps (2) ou respectivement arbre (3), cette garniture (6) d'étanchéité équipant l'arbre (3) ou le corps (2) se présentant sous forme d'un joint linéaire continu, débitable au kilomètre et découpable à longueur, pour venir se loger dans une gorge du vérin conformée en fonction de la disposition souhaitée du joint, ce joint se développant d'une face (19) d'extrémité à une autre (20) suivant un trajet en boucle, la fermeture de la boucle étant obtenue au moins par mise en contact des extrémités du cordon constitutif du joint, et **en ce que** la garniture (6) d'étanchéité se présente au niveau du bord libre de chaque cloison (4, 5) sous forme de deux brins axiaux s'étendant d'une face (19) d'extrémité à une autre (20) de manière à former une double barrière d'étanchéité.

2. Vérin (1) rotatif selon la revendication 1,
**caractérisé en ce que** la fermeture de la boucle, formée par chaque garniture (6) d'étanchéité qui se développe d'une face (19) d'extrémité à une autre (20) suivant un trajet en boucle, est obtenue par simple chevauchement des extrémités du cordon constitutif du joint.

3. Vérin (1) rotatif selon la revendication 2,
**caractérisé en ce que** les extrémités du joint sont, pour faciliter leur chevauchement, taillées en biseau.

4. Vérin (1) rotatif selon l'une des revendications 1 à 3,
**caractérisé en ce que** les garnitures (6) d'étanchéité de l'arbre (3) et du corps (2) s'étendent au niveau des faces (19, 20) d'extrémité en regard l'une de l'autre et sont séparées l'une de l'autre par un plat (21) de liaison, tel qu'un collier ou une rondelle, constituant une piste de glissement de chacune des garnitures (6) et empêchant un frottement des garnitures (6) entre elles.

5. Vérin (1) rotatif selon l'une des revendications 1 à 4,
**caractérisé en ce que** les faces (19, 20) d'extrémité sont constituées par un flasque épaulé de l'arbre (3), les garnitures (6) d'étanchéité du corps (2) et de l'arbre (3) s'étendant au niveau desdites faces dans un plan orthogonal à l'arbre (3), la garniture (6) d'étanchéité de l'arbre (3) étant positionnée sur le pourtour dudit flasque, de préférence en regard de la garniture (6) d'étanchéité équipant le corps (2) de vérin.

6. Vérin (1) rotatif selon l'une des revendications 1 à 4,
**caractérisé en ce que** l'arbre (3) du vérin (1) est muni sur sa longueur en un emplacement quelconque d'au moins un flasque (15) épaulé solidaire de la cloison (4) portée par l'arbre en vue de limiter les risques de flambage de cette dernière, ce flasque (15) divisant le corps (2) en deux volumes de travail et constituant une face d'extrémité de chaque volume de travail, lesdits volumes de travail communiquant entre eux par l'intermédiaire d'orifices (16) ménagés dans ledit flasque (15).

7. Vérin (1) rotatif selon l'une des revendications 1 à 6,
**caractérisé en ce que** la partie de la garniture (6) d'étanchéité, tournée vers la partie de vérin telle que cloison (4, 5), corps (2) ou arbre (3) dont elle est solidaire, est apte à être soumise, lors du fonctionnement du vérin, à une force (F) de poussée tendant à maintenir appliquée la partie dite active de la garniture (6) d'étanchéité contre la paroi du corps (1) ou de l'arbre (3) avec laquelle elle est en contact d'appui glissant.

8. Vérin (1) rotatif selon la revendication 7,
**caractérisé en ce que** la force (F) de poussée est exercée par l'intermédiaire d'un fluide sous pression amené au contact de la garniture (6) d'étanchéité, ce fluide sous pression étant constitué par le fluide d'alimentation des chambres (7, 8) du vérin (1).

9. Vérin (1) rotatif selon la revendication 8,
**caractérisé en ce que** le fluide sous pression destiné à exercer une force (F) de poussée sur la garniture (6) d'étanchéité alimente une chambre (9), dite chambre de compression de la garniture (6), ménagée entre la garniture (6) d'étanchéité et la partie de la cloison (4, 5) servant de siège à ladite garniture (6), cette chambre (9) s'étendant de préférence, sur toute la longueur de la garniture (6).

10. Vérin (1) rotatif selon la revendication 9,
**caractérisé en ce que** la chambre (9) de compression de la garniture (6) d'étanchéité est alimentée en fluide par l'intermédiaire d'un conduit (10, 11A, 11B) communiquant sélectivement avec l'une ou l'autre des chambres (7, 8) du vérin en fonction de la pression régnant à l'intérieur desdites chambres (7, 8).

11. Vérin (1) rotatif selon la revendication 10,
**caractérisé en ce que** le conduit d'alimentation en fluide de la chambre (9) de compression de la garniture (6) d'étanchéité, ménagé dans une cloison (4, 5), comporte un premier tronçon (11A, 11B) établissant une communication entre les chambres (7, 8) du vérin, ce premier tronçon (11A, 11B) débouchant dans un second tronçon (10) d'alimentation en fluide de la chambre (9) de compression de la garniture (6), le premier tronçon (11A, 11B) étant équipé d'un organe (12) d'obturation mobile en fonction de la pression régnant à l'intérieur des chambres (7, 8) du vérin (1) pour obturer tour à tour la partie (11A ou 11B) de ce premier tronçon s'étendant entre la chambre (7, 8) du vérin sous pression et le débouché (13) de ce premier tronçon dans le second tronçon (10).

12. Vérin (1) rotatif selon la revendication 11,
**caractérisé en ce que** l'organe (12) d'obturation est un clapet à bille (14) dont la bille (14) est mobile entre deux positions extrêmes s'étendant de part et d'autre du débouché (13) du premier tronçon (11A, 11B) dans le second tronçon (10).

13. Vérin (1) rotatif selon l'une des revendications 1 et 2,
**caractérisé en ce que** l'organe (12) d'obturation mobile est équipé de deux organes radiaux faisant saillie à travers les entrées du premier tronçon pour s'étendre dans la première ou dans la seconde chambre du vérin, ces organes en saillie constituant des butées de fin de course du vérin au voisinage des positions extrêmes desdites cloisons radiales.

## Claims

1. Rotary actuator (1) of the type consisting of a body (2) and a shaft (3) which delimit between one another at least one work volume, each work volume consisting of an annular cavity which is compartmentalised by means of at least two partitions (4, 5) which extend between two surfaces (19, 20) known as end surfaces of the said cavity, these radial partitions (4, 5) which are supported respectively one (4) by the shaft (3) and the other (5) by the body (2) of the actuator being put, by means of their opposite free edge which is equipped with a packing seal (6), into sealed sliding support contact, one (4) against the inner wall (2A) of the body (2), and the other (5) against the outer wall (3A) of the shaft (3), such as to form at least two chambers (7, 8) with variable volume which can be pressurised alternately by admission of fluid in order to generate relative displacement in rotation of the body (2) and of the shaft (3), **characterised in that** each packing seal (6) which equips the free edge of a partition (4, 5) is extended in the direction of each end surface (19, 20) of the annular cavity until it is in front of the said surface, in order to extend in the area of connection between the end surface (19, 20) and respectively the body (2) or shaft (3), this packing seal (6) which equips the shaft (3) or the body (2) being in the form of a continuous linear seal, which can be cut to length per kilometre, in order to be accommodated in a groove in the actuator according to the required arrangement of the seal, this seal extending from one end surface (19) to another (20) according to a path in a loop, the closure of the loop being obtained at least by putting into contact the ends of the strand which constitute the seal, and **in that** the packing seal (6) is present at the free end of each partition (4, 5) in the form of two axial strands which extend from one end surface (19) to another (20), such as to form a double sealing barrier.

2. Rotary actuator (1) according to claim 1, **characterised in that** the closure of the loop which is formed by each packing seal (6) which extends from one end surface (19) to another (20) according to a path in the form of a loop, is obtained by simple overlapping of the ends of the strand which constitutes the seal.

3. Rotary actuator (1) according to claim 2, **characterised in that** in order to facilitate their overlapping, the ends of the seal are cut in bevelled form.

4. Rotary actuator (1) according to any one of claims 1 to 3, **characterised in that** the packing seals (6) of the shaft (3) and of the body (2) extend at the end surfaces (19, 20) which are opposite one another, and are separated from one another by a flat connection ring (21) such as a collar or a washer, which constitutes a sliding track for each of the seals (6) and prevents friction of the seals (6) with one another.

5. Rotary actuator (1) according to any one of claims 1 to 4, **characterised in that** the end surfaces (19, 20) consist of a shouldered flange of the shaft (3), the packing seals (6) of the body (2) and of the shaft (3) extending at the said surfaces on a plane which is at right-angles to the shaft (3), the packing seal (6) of the shaft (3) being positioned on the periphery of the said flange, preferably opposite the packing seal (6) which equips the body (2) of the actuator.

6. Rotary actuator (1) according to any one of claims 1 to 4, **characterised in that** the shaft (3) of the actuator (1) is provided in any location on its length with at least one shouldered flange (15) which is integral with the partition (4) which is supported by the shaft in order to limit the risks of buckling of the latter, this flange (15) dividing the body (2) into two work volumes and constituting an end surface of each work volume, the said work volumes communicating with one another by means of apertures (16) which are provided in the said flange (15).

7. Rotary actuator (1) according to any one of claims 1 to 6, **characterised in that** the part of the packing seal (6) which faces the part of the actuator such as the partition (4, 5), body (2) or shaft (3) with which it is integral, can be subjected during functioning of the actuator to a thrust force (F) which tends to keep the so-called active part of the packing seal (6) applied against the wall of the body (1) or of the shaft (3) with which it is in sliding support contact.

8. Rotary actuator (1) according to claim 7, **characterised in that** the thrust force (F) is exerted by means of a pressurised fluid which is brought into contact with the packing seal (6), this pressurised fluid consisting of the fluid to supply the chambers (7, 8) of the actuator (1).

9. Rotary actuator (1) according to claim 8, **characterised in that** the pressurised fluid which is designed to exert a thrust force (F) on the packing seal (6) supplies a chamber (9), known as the seal compression chamber (6), which is provided between the packing seal and the part of the partition (4, 5) which acts as a seat for the said seal (6), this chamber (9) preferably extending along the entire length of the seal (6).

10. Rotary actuator (1) according to claim 9, **characterised in that** the compression chamber (9) of the packing seal (6) is supplied with fluid by means of a duct (10, 11A, 11B) which communicates selectively with one or the other of the chambers (7, 8) of the actuator according to the pressure which exists inside the said chambers (7, 8).

11. Rotary actuator (1) according to claim 10, **characterised in that** the duct which supplies with fluid the compression chamber (9) of the packing seal (6) and is provided in a partition (4, 5) comprises a first section (11A, 11B) which establishes communication between the chambers (7, 8) of the actuator, this first section (11A, 11B) opening into a second section (10) to supply with fluid the compression chamber (9) of the seal (6), the first section (11A, 11B) being equipped with a shutter unit (12) which is mobile according to the pressure which exists inside the chambers (7, 8) of the actuator (1), in order to shut in turn the part (11A or 11B) of this first section which extends between the chamber (7, 8) of the pressurised actuator and the opening (13) of this first section into the second section (10).

12. Rotary actuator (1) according to claim 11, **characterised in that** the shutter unit (12) is a ball valve (14), the ball (14) of which is mobile between two end positions which extend on both sides of the opening (13) of the first section (11A, 11B) into the second section (10).

13. Rotary actuator (1) according to claim 1 and claim 2, **characterised in that** the mobile shutter unit (12) is equipped with two radial units which project through the intakes of the first section in order to extend into the first or into the second chamber of the actuator, these projecting units constituting end-of-travel stops of the actuator in the vicinity of the end positions of the said radial partitions.

## Patentansprüche

1. Drehsteller (1), bestehend aus einem Gehäuse (2) und einer Welle (3) die zwischen sich mindestens einen Arbeitsraum begrenzen, wobei jeder Arbeitsraum aus einem ringförmigen Hohlraum besteht, der durch mindestens zwei Trennwände (4, 5) unterteilt ist, die sich zwischen zwei Flächen (19, 20) erstrecken, die Endflächen des Hohlraums genannt werden, und von denen eine Trennwand (4) von der Welle (3) und die andere Trennwand (5) von dem Gehäuse (2) des Drehstellers getragen wird, wobei ihre mit einer Dichtung (6) versehenen, gegenüberliegenden freien Kanten einen gleitenden, dichten Anlagekontakt einerseits mit der Innenwand (2A) des Gehäuses (2) und andererseits mit der Außenwand (3A) der Welle (3) haben und so mindestens zwei Kammern (7, 8) mit variablem Volumen bilden, die durch Aufnahme eines Fluids abwechselnd unter Druck gesetzt werden können, um so eine relative Drehbewegung des Gehäuses (2) und der Welle (3) zu erzeugen, **dadurch gekennzeichnet, dass** jede Dichtung (6), mit der die freie Kante einer Trennwand (4, 5) versehen ist, in Richtung jeder Endfläche (19, 20) des ringförmigen Hohlraums bis zu der Endfläche verlängert ist, sodass sie sich in den Verbindungsbereich zwischen Endfläche (19, 20) und Gehäuse (2) beziehungsweise Welle (3) erstreckt, wobei die Dichtung (6), mit der die Welle (3) oder das Gehäuse (2) versehen ist, in Form einer durchgehenden Lineardichtung vorliegt, die als Meterware erhältlich ist und abgelängt werden kann, damit sie sich in eine Rille des Drehstellers legen kann, die in Abhängigkeit von der gewünschten Anordnung der Lineardichtung gestaltet ist, wobei die Lineardichtung von einer Endfläche (19) bis zur anderen (20) schleifenförmig verläuft und die Schleife zumindest durch das Aneinanderlegen der Enden des Wulstes, der die Lineardichtung bildet, geschlossen wird, und wobei die Dichtung (6) an der freien Kante jeder Trennwand (4, 5) in Form von zwei axialen Strängen vorliegt, die sich von einer Endfläche (19) bis zur anderen (20) so erstrecken, dass sie eine doppelte Dichtungsbarriere bilden.

2. Drehsteller (1) nach Anspruch 1, **dadurch gekennzeichnet, dass** die Schleife, die von jeder Dichtung (6), die von einer Endfläche (19) bis zur anderen (20) schleifenförmig verläuft, gebildet wird, durch einfache Überlappung der Enden geschlossen ist.

3. Drehsteller (1) nach Anspruch 2, **dadurch gekennzeichnet, dass** die Enden der Lineardichtung abgeschrägt sind, um ihre Überlappung zu vereinfachen.

4. Drehsteller (1) nach einem der Ansprüche 1 bis 3, **dadurch gekennzeichnet, dass** sich die Dichtungen (6) der Welle (3) und des Gehäuses (2) an den Endflächen (19, 20) einander gegenüberliegend erstrecken und von einem Verbindungsflachstück (21) wie einem Ring oder einer Scheibe voneinander getrennt sind, das für jede der Dichtungen (6) eine Gleitbahn bildet und eine Reibung zwischen den Dichtungen (6) verhindert.

5. Drehsteller (1) nach einem der Ansprüche 1 bis 4, **dadurch gekennzeichnet, dass** die Endflächen (19, 20) von einem abgesetzten Flansch der Welle (3) gebildet sind, wobei sich die Dichtungen (6) des Gehäuses (2) und der Welle (3) von den Endflächen in einer senkrecht zur Welle (3) stehenden Ebene erstrecken, wobei die Dichtung (6) der Welle (3) auf dem äußeren Umfang des Flansches sitzt, vorzugsweise gegenüber der Dichtung (6) des Gehäuses (2) des Drehstellers.

6. Drehsteller (1) nach einem der Ansprüche 1 bis 4, **dadurch gekennzeichnet, dass** die Welle (3) des Drehstellers (1) über ihre gesamte Länge an einer Stelle mit mindestens einem abgesetzten Flansch (15) versehen ist, der mit der von der Welle getragenen Trennwand (4) fest verbunden ist, um die Gefahr des Abknickens der Trennwand zu verringern, wobei der Flansch (15) das Gehäuse (2) in zwei Arbeitsräume teilt und eine Endfläche jedes Arbeitsraums bildet, wobei die Arbeitsräume durch in dem Flansch (15) angebrachte Öffnungen (16) miteinander verbunden sind.

7. Drehsteller (1) nach einem der Ansprüche 1 bis 6, **dadurch gekennzeichnet, dass** der Teil der Dichtung (6), der zu dem Teil des Drehstellers wie Trennwand (4, 5), Gehäuse (2) oder Welle (3), an dem sie angebracht ist, gedreht ist, bei Betrieb des Drehstellers einer Schubkraft (F) ausgesetzt werden kann, die den so genannten aktiven Teil der Dichtung (6) an der Wand des Gehäuses (1) oder der Welle (3), mit der sie einen gleitenden Anlagekontakt hat, in Anlage hält.

8. Drehsteller (1) nach Anspruch 7, **dadurch gekennzeichnet, dass** die Schubkraft (F) von einem unter Druck stehenden Fluid aufgebracht wird, das mit der Dichtung (6) in Kontakt gebracht wird, wobei das unter Druck stehende Fluid das Versorgungsfluid der Kammern (7, 8) des Drehstellers (1) ist.

9. Drehsteller (1) nach Anspruch 8, **dadurch gekennzeichnet, dass** das unter Druck stehende Fluid, das eine Schubkraft (F) auf die Dichtung (6) aufbringen soll, eine Kammer (9) versorgt, die Druckkammer der Dichtung (6) genannt wird, die zwischen der Dichtung (6) und dem Teil der Trennwand (4, 5) angeordnet ist, die als Sitz für die Dichtung (6) dient, wobei sich die Kammer (9) vorzugsweise über die gesamte Länge der Dichtung (6) erstreckt.

10. Drehsteller (1) nach Anspruch 9, **dadurch gekennzeichnet, dass** die Druckkammer (9) der Dichtung (6) über eine Leitung (10, 11A, 11B), die in Abhängigkeit von dem in den Kammern (7, 8) herrschenden Druck wahlweise mit der einen oder anderen der Kammern (7, 8) des Drehstellers verbunden ist, mit einem Fluid versorgt wird.

11. Drehsteller (1) nach Anspruch 10, **dadurch gekennzeichnet, dass** die Fluidversorgungsleitung der Druckkammer (9) der Dichtung (6), die in einer Trennwand (4, 5) angeordnet ist, einen ersten Abschnitt (11A, 11B) umfasst, der eine Verbindung zwischen den Kammern (7, 8) des Drehstellers herstellt, wobei der erste Abschnitt (11A, 11B) in einen zweiten Abschnitt (10) der Fluidversorgungsleitung der Druckkammer (9) der Dichtung (6) mündet und mit einem Verschlusselement (12) versehen ist, das in Abhängigkeit von dem in den Kammern (7, 8) des Drehstellers (1) herrschenden Druck beweglich ist, um abwechselnd den Teil (11A oder 11B) des ersten Abschnittes zu verschließen, der sich zwischen der unter Druck stehenden Kammer (7, 8) des Drehstellers und der Mündung (13) des ersten Abschnittes in den zweiten Abschnitt (10) erstreckt.

12. Drehsteller (1) nach Anspruch 11, **dadurch gekennzeichnet, dass** das Verschlusselement (12) ein Kugelventil ist, dessen Kugel (14) zwischen zwei Endpositionen beweglich ist, die sich von einer zur anderen Seite der Mündung (13) des ersten Abschnittes (11A, 11B) in den Zweiten Abschnitt (10) erstrecken.

13. Drehsteller (1) nach einem der Ansprüche 1 und 2, **dadurch gekennzeichnet, dass** das bewegliche Verschlusselement (12) mit zwei radialen Elementen versehen ist, die über die Eingänge des ersten Abschnittes hinausragen und sich in die erste oder zweite Kammer des Drehstellers erstrecken, wobei diese hinausragenden Elemente Anschläge des Drehstellers an den Endpositionen der radialen Wände bilden.
